# EUROPÄISCHE PATENTANMELDUNG

(11) **EP 1 465 139 A1**
(43) Veröffentlichungstag der Anmeldung: **06.10.2004**
(21) Anmeldenummer: 03290821.2
(22) Anmeldetag: 01.04.2003
(51) Int. Cl.: G09F 27/00

(54) **Verfahren zum Betreiben einer Vielzahl von Werbe- und Anzeigeeinrichtungen, sowie dafür geeignete Werbe- und Anzeigeeinrichtung, Zentrale und System**

(71) Anmelder: ALCATEL, 75008 Paris (FR)
(72) Erfinder: Keuthe, Jürgen, 12681 Berlin (DE)
(74) Vertreter: Brose, Gerhard

(57) **Zusammenfassung**

Die Erfindung betrifft ein Verfahren zum Betreiben einer Vielzahl von Werbe- und Anzeigeeinrichtungen (IE1, IE2, ..., IEm) mit matrixartigem Bildaufbau, bei dem in einer Zentrale (C) ein erster zur Anzeige zu bringender Informationsinhalt eingegeben wird, bei dem dort eine Steuerinformation eingegeben wird, die aussagt, an welcher aus der Vielzahl von Werbe- und Anzeigeeinrichtungen (IE1, IE2, ..., IEm) dieser erste Informationsinhalt anzuzeigen ist, bei dem aus diesem ersten Informationsinhalt und einer Vielzahl anderer Informationsinhalte ein Datenstrom (DS) gebildet wird, bei dem dieser Datenstrom (S) rundfunkartig (RS) an die Vielzahl von Werbe- und Anzeigeeinrichtungen (IE1, IE2, ..., IEm) verteilt wird, bei dem die Steuerinformation an wenigstens eine (IE1) aus der Vielzahl von Werbe- und Anzeigeeinrichtungen (IE1, IE2, ..., IEm) übertragen wird, bei dem wenigstens die eine aus der Vielzahl von Werbeund Anzeigeeinrichtungen den Datenstrom und die Steuerinformation empfängt, bei dem diese Werbe- und Anzeigeeinrichtung die Steuerinformation daraufhin auswertet, ob und wann der erste Informationsinhalt zur Anzeige zu bringen ist, und bei dem diese Werbe- und Anzeigeeinrichtung (IE1) den ersten Informationsinhalt zum vorgesehenen Zeitpunkt zur Anzeige bringt, sowie eine Werbe- und Anzeigeeinrichtung, eine Zentrale und ein System.

## Beschreibung

Die Erfindung betrifft ein Verfahren zum Betreiben einer Vielzahl von Werbe- und Anzeigeeinrichtungen mit matrixartigem Bildaufbau nach dem Oberbegriff des Anspruchs 1, eine Werbeund Anzeigeeinrichtung nach dem Oberbegriff des Anspruchs 2, eine Zentrale nach dem Oberbegriff des Anspruchs 3 und ein System nach dem Oberbegriff des Anspruchs 4.

Werbe- und Anzeigetafeln mit wechselnden Inhalten sind heute mehr und mehr verbreitet. Sie dienen in der Regel ausschließlich der Werbung für bestimmte Produkte oder ausschließlich der Anzeige von Fahrgastinformation bei öffentlichen Verkehrsmitteln. In Sportstätten dienen sie oft der Information über einen aktuellen Spielstand. Nur selten greifen Werbung, Anzeige und Informationen anderer Art ineinander. Informationen etwa durch Polizei oder Feuerwehr sind schon gar nicht erst vorgesehen.

Eine Vielzahl von Werbeeinrichtungen ist überhaupt nicht dazu vorgesehen, beliebige Inhalte anzuzeigen. Viele weisen aber einen matrixartigen Bildaufbau auf und sind damit grundsätzlich in der Lage, jeden beliebigen Inhalt anzuzeigen. Nur solche sollen hier weiter betrachtet werden. Aber auch dann scheitert die Anzeige beliebiger Inhalte in der Regel daran, daß herkömmliche Werbe- und Anzeigeeinrichtungen immer ganze Systeme mit einem ausschließlich dafür vorgesehenen Datennetz bilden, die mit der Zentrale eines bestimmten Betreibers verbunden sind. Ein Zugriff durch andere ist nicht vorgesehen.

Der Erfindung liegt die Aufgabe zugrunde, Werbe- und Anzeigeeinrichtungen mit matrixartigem Bildaufbau flexibler einsetzbar zu machen.

Diese Aufgabe wird erfindungsgemäß gelöst durch ein Verfahren nach der Lehre des Anspruchs 1, eine Werbe- und Anzeigeeinrichtung nach der Lehre des Anspruchs 2, eine Zentrale nach der Lehre des Anspruchs 3 und ein System nach der Lehre des Anspruchs 4.

Der Erfindung liegt der Gedanke zugrunde, eine Vielzahl von Werbe- und Anzeigeeinrichtungen (Informationstafeln) rundfunkartig (z.B. durch das digitale Fernsehen), mit allen zur Anzeige zu bringenden Informationsinhalten zu versorgen. Die Auswahl der Informationsinhalte erfolgt lokal; die Ansteuerung der Auswahl erfolgt durch eine Zentrale. Die Eingabe der Informationsinhalte und die Vorgabe über Ort und Zeit der Darstellung erfolgt über das Internet.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein erfindungsgemäßes System, in dem das erfindungsgemäße Verfahren mit erfindungsgemäßen Werbe- und Anzeigeeinrichtungen durchgeführt werden kann.
- Figur 2: zeigt eine erfindungsgemäße Werbe- und Anzeigeeinrichtung.
- Figur 3: zeigt eine Steuereinheit einer erfindungsgemäßen Werbe- und Anzeigeeinrichtung.
- Figur 4: zeigt eine erfindungsgemäße Zentrale.

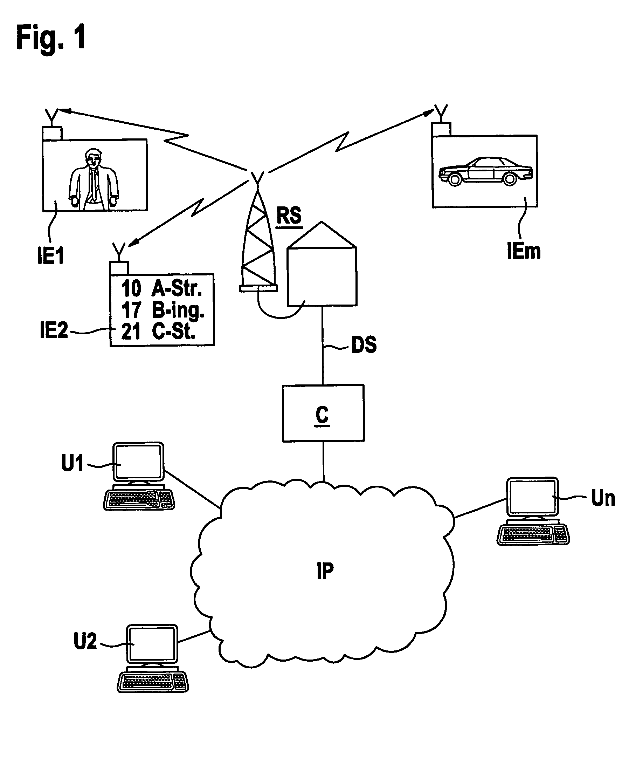

Anhand der Figur 1 wird zunächst das erfindungsgemäße System und das erfindungsgemäße Verfahren beschrieben.

Das System gemäß Figur 1 weist eine Reihe von Werbe- und Anzeigeeinrichtungen auf, von denen die Einrichtungen IE1, IE2 und IEm dargestellt sind. Die Werbe- und Anzeigeeinrichtungen IE1, IE2, ..., IEm werden per Funk von einer Rundfunkstation RS mit Information versorgt. Die Rundfunkstation RS ist als Kombination einer Antenneneinrichtung und eines Funkhauses dargestellt. Beide sind per Kabel miteinander verbunden. Weiter weist das System eine Zentrale C auf, die über ein Datennetz, hier das Internet IP, mit einer Reihe von Benutzern in Verbindung treten kann. Die Benutzer sind durch die Benutzer U1, U2 und Un repräsentiert. Die Zentrale C sendet einen Datenstrom DS an die Rundfunkstation RS. Die Rundfunkstation, das Datennetz und die Benutzer werden nicht als Bestandteil des erfindungsgemäßen Systems angesehen, werden aber hier mit verwendet.

Ein Benutzer, etwa der Benutzer U2, will nun eine Werbung auf verschiedenen, dem System angehörigen Werbe- und Anzeigeeinrichtungen schalten. Grundsätzlich kann er dies natürlich mit herkömmlichen Medien mit einem Operator des Systembetreibers vereinbaren. Bevorzugt stellt er jedoch eine Datenverbindung, im Beispiel über das Internet IP, her. Er gibt dann den von ihm gewünschten, zur Anzeige zu bringenden Informationsinhalt ein. Diese Eingabe kann dadurch erfolgen, daß dieser Inhalt in direkter Form, in welchem Format auch immer, übertragen wird. Sie kann aber auch durch Verweis auf einen bereits bekannten oder auf einen an anderer Stelle des Internets vorliegenden Informationsinhalt erfolgen.

Weiter wird der Benutzer, vorzugsweise auf demselben Wege, noch eingeben, unter welchen Bedingungen er diese Werbung schalten möchte. Möglicherweise wird er sich telefonisch mit einem Operator in der Zentrale absprechen, wann, wie lange und wo der betreffende Informationsinhalt zur Anzeige gebracht werden soll und zu welchen Bedingungen dies erfolgen kann. Je konkreter die Wünsche sind, desto größer ist die Wahrscheinlichkeit, daß sie mit Wünschen anderer Benutzer kollidieren. Dann muß auf Alternativen übergegangen werden. Im Falle der Absprache mit dem Operator muß dieser dann die Wünsche an der Zentrale eingeben. In der Praxis wird auch der Operator den Weg über das Internet nehmen.

Im Prinzip und vorteilhafterweise kann aber die Arbeit des 0-perators fallweise an den Benutzer übergeben werden. Dann kann beispielsweise der Benutzer ein Internetformular ausfüllen und dieses zusammen mit dem gewünschten Informationsinhalt an die Zentrale senden. Durch einen auf der Seite der Zentrale automatisierten Dialog kann im Falle von Kollisionen eine Alternative gesucht werden. Ein solcher automatisierter Dialog kann auch Vorschläge seitens des Systems oder die Bereitstellung einer Aufstellung mit noch freien Möglichkeiten (Ort und Zeit) beinhalten.

Die Bedingungen, unter denen ein bestimmter Informationsinhalt dann an mindestens einer der Werbe- und Anzeigeeinrichtungen IE1, IE2, ..., IEm zur Anzeige gebracht werden soll, werden anschließend als Steuerinformation aufbereitet.

Erfindungsgemäß ist nun vorgesehen, den Informationsinhalt dieser Werbung und die zugehörige Steuerinformation an die Werbe- und Anzeigeeinrichtungen zu senden und dort weiter verarbeiten zu lassen. Für die Informationsinhalte ist hier eine rundfunkartige Weitergabe vorgesehen. Dies kann als Bestandteil eines übertragenen Fernsehsignals, vorzugsweise des digitalen Fernsehens, erfolgen. Es kann aber auch ein Fernsehsignal ausschließlich hierfür vorgesehen werden. Auf diese Weise können auch kürzere oder längere Videoszenen übertragen und zur Anzeige gebracht werden.

Diese Informationsinhalte müssen nun an mindestens einer der Werbe- und Anzeigeeinrichtungen zum vorgesehenen Zeitpunkt zur Anzeige gebracht werden. Die Informationsinhalte für andere Werbe- und Anzeigeeinrichtungen und für andere Zeiten werden auf dieselbe Weise übertragen. Vorzugsweise wird aus allen Informationsinhalten ein kontinuierlicher Datenstrom gebildet, der auf die beschriebene Weise an alle Werbe- und Anzeigeeinrichtungen übertragen wird.

Es ist nicht absolut zwingend, daß ein zur Anzeige vorgesehener Zeitpunkt mit vorgegeben wird. In diesem Fall würde eben immer dann eine Anzeige geschaltet werden, wenn die zugehörige Steuerinformation gerade ankommt. Das System kann aber viel flexibler betrieben werden, wenn auch über die Zeitpunkte oder Zeiträume der Anzeigen Vorgaben gemacht werden können. Für Fahrplanangaben kann sinnvoll sein, diese immer einen bestimmten Zeitraum vor dem Eintreffen der nächsten Bahn einzublenden. Werbespots werden heute oft in Blöcken zur Anzeige gebracht, wobei ein Werbespot mit einem bestimmten Abstand mehrfach zur Anzeige gebracht wird.

Je flexibler die Einrichtung arbeitet und je mehr auch lokale Auslöser eine Rolle spielen, desto schwieriger ist der tatsächliche Ablauf zum Zweck der Abrechnung nachzuhalten. Hier kann es sinnvoll sein, vor Ort die für die Abrechnung erforderlichen Daten zu erfassen und auf geeignete Weise zurück zu melden. Ist das Medium für die Übertragung der Steuerinformation der Mobilfunk oder ein vergleichbarer Funkdienst, dann kann mit diesem Medium auch eine Rückmeldung erfolgen.

Ob dieses rundfunkartig verteilte Signal nun terrestrisch oder über einen Satelliten oder über Kabel verteilt wird, ist prinzipiell unerheblich. Jedenfalls soll erfindungsgemäß zur Verteilung ein Medium herangezogen werden, das nicht in erster Linie für diesen Zweck gedacht ist, und zu dem auf einfache Weise von jeder Werbe- und Anzeigeeinrichtung aus zugegriffen werden kann.

Der Zugriff auf diesen Datenstrom erfolgt nun von jeder Werbe- und Anzeigeeinrichtung aus entsprechend der für sie gültigen Steuerinformation. Diese muß selbstverständlich von der Zentrale C vorab an diese Einrichtungen versandt werden. Bevorzugt werden die Steuerinformationen für alle Werbe- und Anzeigeeinrichtungen in gleicher Art zusammengefaßt, wie die einzelnen Informationsinhalte. Dieses so zusammengefaßte Gesamt-Steuersignal ist gegenüber dem übrigen Datenstrom schmalbandig und kann wie ein einzelner Informationsinhalt in diesen Datenstrom integriert werden.

Die Steuerinformationen können aber auch auf andere Weise an die betroffenen Werbe- und Anzeigeeinrichtungen übertragen werden. Beispielsweise kann dies an jede einzelne dieser Einrichtungen etwa nach Art einer SMS im Mobilfunk erfolgen (SMS = Short Message Service). Damit kann auch der Polizei oder Feuerwehr die zusätzliche Möglichkeit gegeben werden, kurze Anzeigeinhalte ("STAU", "Bitte Station räumen!", "Tunnel gesperrt!") auf einfache Weise vorübergehend an die Stelle der bisherigen Informationsinhalte einer bestimmten Einrichtung zu platzieren.

Über die Zentrale erfolgt weiter auch die Abrechnung mit den Benutzern. Auch etwaige Filter, die bestimmte Inhalte nicht zulassen, sind vorteilhafter Weise an dieser Stelle vorzusehen. Das Benutzerverhalten einerseits und die Tarifstrategie des Betreibers andererseits können zwar durch entsprechende vorab einzugebende Regeln bestimmt werden, dies betrifft aber dann vorwiegend die kommerzielle Seite der Erfindung.

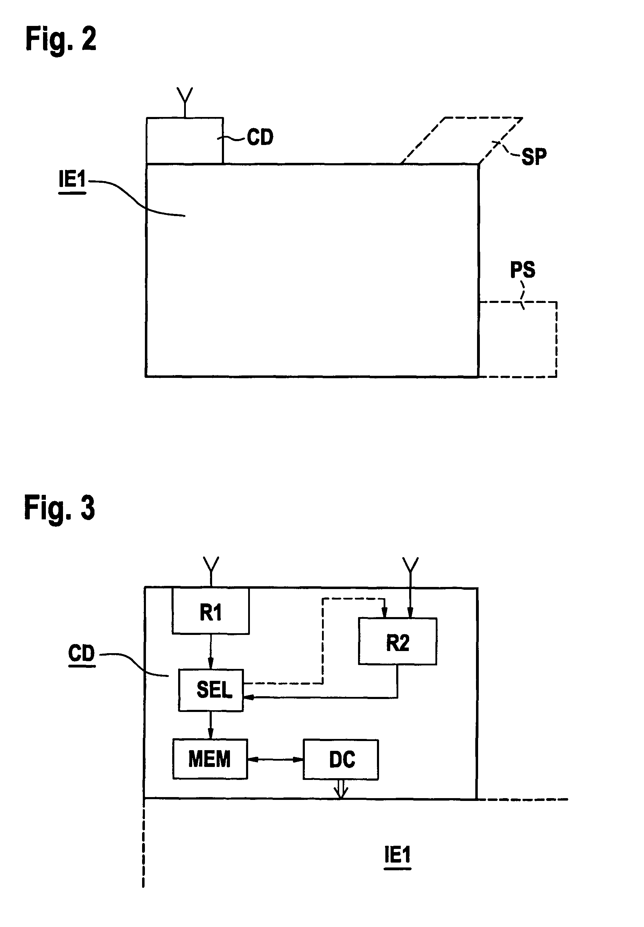

Anhand der Figur 2 wird kurz der Gesamtaufbau einer erfindungsgemäßen Werbe- und Anzeigeeinrichtung, hier der Werbe- und Anzeigeeinrichtung IE1, dargestellt. Außer der hier nicht näher bezeichneten Anzeigefläche weist diese Einrichtung eine Steuereinheit CD auf, die hier wegen des bevorzugten Funkempfangs am oberen Rand der Einrichtung dargestellt ist. Für die erforderliche Energieversorgung ist, ebenfalls am oberen Rand, ein Solarpaneel SP oder, alternativ dazu, eine Netzstromversorgung PS vorgesehen. Beide sind gestrichelt dargestellt.

Anhand der Figur 3 wird die Steuereinheit CD der Werbe- und Anzeigeeinrichtung IE1 näher beschrieben. Die Steuereinheit CD weist einen ersten Empfänger R1, eine Auswahlschaltung SEL, einen Speicher MEM, eine Anzeigesteuerung DC und einen zweiten Empfänger R2 auf.

Der Empfänger R1 nimmt, hier über eine nicht bezeichnete Antenne, den von der Zentrale C, hier über die Rundfunkstation RS, kommenden Datenstrom DS auf und gibt ihn weiter an die Auswahlschaltung SEL. Dieser Datenstrom enthält zumindest die Informationsinhalte, unter Umständen auch die Steuerinformationen. Falls der Datenstrom auch die Steuerinformationen mit enthält, werden diese durch die Auswahlschaltung SEL ausgefiltert und, auf dem gestrichelt gezeichneten Weg, an den Empfänger R2 weitergegeben, der diese dann dahingehend auswertet, daß er der Auswahlschaltung SEL auf dem durchgezeichneten Weg die für die Auswahl der Informationsinhalte aus dem Datenstrom DS erforderlichen Auswahl-Steuerinformationen vorgibt.

Die anhand der Steuerinformationen aus dem Datenstrom DS ausgewählten Informationsinhalte werden im Speicher MEM zusammen mit der Information betreffend die vorgesehene Auswahlzeit gespeichert und zur vorgesehenen Zeit über die Anzeigesteuerung DC zur Anzeige gebracht. Sofern eine sofortige Anzeige gewünscht wird, braucht die Anzeigezeit nicht mit abgespeichert zu werden. Die Anzeigesteuerung DC paßt in geeigneter, an sich bekannter Weise, die Informationsinhalte an die Anzeigetafel an.

Der Empfänger R2 kann alternativ oder auch zusätzlich auf direktem Wege die Steuerinformationen erhalten. Dazu ist er in der Zeichnung mit einem gestrichelten Weg mit einer eigenen Antenne verbunden.

Eine Steuereinheit CD kann unter Umständen auch mehrere räumlich benachbarte Werbe- und Anzeigeeinrichtungen steuern, auch mit unterschiedlichen Informationsinhalten.

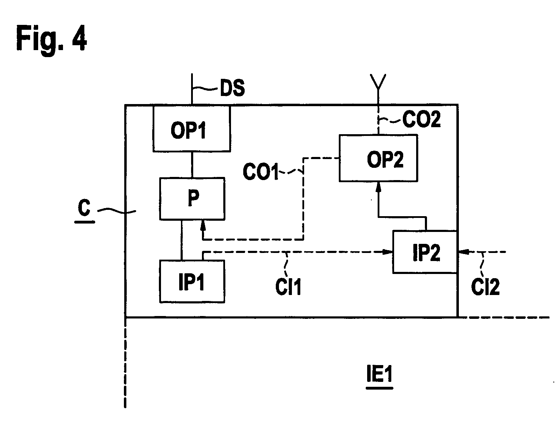

Anhand der Figur 4 wird nun noch beispielhaft der Aufbau einer Zentrale C beschrieben. Diese weist zwei Eingangsschaltungen IP1 und IP2 als erste und zweite Eingabemittel, eine Aufbereitungsschaltung P und zwei Ausgabeschaltungen OP1 und OP2 als erste und zweite Sendemittel auf.

Von der ersten Eingangsschaltung IP1 führt ein Datenweg über die Aufbereitungsschaltung P zur Ausgabeschaltung OP1. Der Eingang der ersten Eingangsschaltung ist vorzugsweise mit dem Internat verbunden. Die zweite Eingangsschaltung IP2 weist alternativ oder sich gegenseitig ergänzend einen Steuereingabeweg CI1 von der ersten Eingangsschaltung und einen zweiten Steuereingabeweg CI2 für einen Operator auf. Von der zweiten Eingangsschaltung IP2 werden die Steuerinformationen an die zweite Ausgabeschaltung OP2 gegeben. Diese gibt sie entweder über einen Steuerausgabeweg CO1 an die Aufbereitungsschaltung P, damit sie in den Datenstrom DS mit eingebunden werden oder direkt über einen Steuerausgabeweg CO2 an eine Antenne. Selbstverständlich sind die physikalischen Formate in beiden Fällen verschieden.

## Patentansprüche

1. Verfahren zum Betreiben einer Vielzahl von Werbe- und Anzeigeeinrichtungen (IE1, IE2, ..., IEm) mit matrixartigem Bildaufbau, **dadurch gekennzeichnet, daß** in einer Zentrale (C) ein erster zur Anzeige zu bringender Informationsinhalt eingegeben wird, daß dort eine Steuerinformation eingegeben wird, die aussagt, an welcher aus der Vielzahl von Werbe- und Anzeigeeinrichtungen (IE1, IE2, ..., IEm) dieser erste Informationsinhalt anzuzeigen ist, daß aus diesem ersten Informationsinhalt und einer Vielzahl anderer Informationsinhalte ein Datenstrom (DS) gebildet wird, daß dieser Datenstrom (DS) rundfunkartig (RS) an die Vielzahl von Werbe- und Anzeigeeinrichtungen (IE1, IE2, ..., IEm) verteilt wird, daß die Steuerinformation an wenigstens eine (IE1) aus der Vielzahl von Werbe- und Anzeigeeinrichtungen (IE1, IE2, ..., IEm) übertragen wird, daß wenigstens die eine (IE1) aus der Vielzahl von Werbe- und Anzeigeeinrichtungen (IE1, IE2, ..., IEm) den Datenstrom (DS) und die Steuerinformation empfängt, daß diese Werbe- und Anzeigeeinrichtung (IE1) die Steuerinformation daraufhin auswertet, ob der erste Informationsinhalt zur Anzeige zu bringen ist, und daß diese Werbe- und Anzeigeeinrichtung (IE1) den ersten Informationsinhalt zur Anzeige bringt.

2. Werbe- und Anzeigeeinrichtung (IE1) mit einer Anzeigeeinheit mit matrixartigem Bildaufbau zur Anzeige zeitlich wechselnder Informationsinhalte, **dadurch gekennzeichnet, daß** die Werbe- und Anzeigeeinrichtung erste Empfangsmittel (R1) zum Empfang eines Datenstroms (DS) aufweist, der eine Vielzahl zur Anzeige bringbarer Informationsinhalte enthält, daß die Werbe- und Anzeigeeinrichtung (IE1) zweite Empfangsmittel (R2) zum Empfang einer Steuerinformation enthält, daß die Werbe- und Anzeigeeinrichtung (IE1) ein Auswahlmittel (SEL) enthält, um anhand der empfangenen Steuerinformation einen Informationsinhalt aus der Vielzahl zur Anzeige bringbarer Informationsinhalte auszuwählen, und daß die Werbe- und Anzeigeeinrichtung (IE1) ein Ansteuermittel (SEL) enthält, um die Anzeigeeinheit mit matrixartigem Bildaufbau mit dem ausgewählten Informationsinhalt anzusteuern.

3. Zentrale (C) für ein System mit einer Vielzahl von Werbeund Anzeigeeinrichtungen (IE1, IE2, ..., IEm) mit matrixartigem Bildaufbau, **dadurch gekennzeichnet, daß** sie erste Eingabemittel (IP1) zur Eingabe von zur Anzeige bringbarer Informationsinhalte aufweist, daß sie Aufbereitungsmittel (P) aufweist, um aus einer Vielzahl zur Anzeige bringbarer Informationsinhalte einen Datenstrom (DS) zu bilden, daß sie Sendemittel (OP1) aufweist, um den Datenstrom an eine diesen Datenstrom rundfunkartig verteilende Einrichtung (RS) zu senden, daß sie zweite Eingabemittel (IP2) zur Eingabe von Steuerinformation zur Auswahl eines der zur Anzeige bringbaren Informationsinhalte enthält, und daß sie zweite Sendemittel (OP2) aufweist, um die Steuerinformation an wenigstens eine (IE1) aus der Vielzahl von Werbe- und Anzeigeeinrichtungen zu senden.

4. System mit einer Vielzahl von Werbe- und Anzeigeeinrichtungen (IE1, IE2, ..., IEm) mit matrixartigem Bildaufbau, **dadurch gekennzeichnet, daß** es eine Vielzahl von Werbeund Anzeigeeinrichtungen nach Anspruch 2 und eine Zentrale nach Anspruch 3 aufweist.

5. Verfahren nach Anspruch 1, **dadurch gekennzeichnet, daß** die Steuerinformation in den rundfunkartig zu verteilenden Datenstrom (DS) mit eingefügt wird.

6. Verfahren nach Anspruch 5, **dadurch gekennzeichnet, daß** die Steuerinformationen für mehrere oder alle Werbe- und Anzeigeeinrichtungen (IE1, IE2, ..., IEm) zu einem Gesamt-Steuerinformations-Datenstrom zusammengefaßt und als solcher in den rundfunkartig zu verteilenden Datenstrom (DS) mit eingefügt wird.

7. Verfahren nach Anspruch 1, **dadurch gekennzeichnet, daß** die Steuerinformation auch Angaben über den Zeitpunkt oder Zeitraum enthält, zu dem der zugehörige Informationsinhalt zur Anzeige zu bringen ist.
